(19)

Europäisches
Patentamt

European
Patent Office

Office européen
des brevets

(11) **EP 4 465 395 A1**

(12) **EUROPEAN PATENT APPLICATION**

(43) Date of publication:
**20.11.2024 Bulletin 2024/47**

(21) Application number: **24167504.0**

(22) Date of filing: **28.03.2024**

(51) International Patent Classification (IPC):
*H01M 10/04* (2006.01)     *H01M 10/0587* (2010.01)
*H01M 50/103* (2021.01)    *H01M 50/147* (2021.01)
*H01M 50/449* (2021.01)    *H01M 50/46* (2021.01)
*H01M 50/489* (2021.01)

(52) Cooperative Patent Classification (CPC):
H01M 10/0587; H01M 10/0431; H01M 50/103;
H01M 50/147; H01M 50/449; H01M 50/461;
H01M 50/489

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.05.2023 JP 2023083330**

(71) Applicant: **Prime Planet Energy & Solutions, Inc.
Chuo-ku
Tokyo
103-0022 (JP)**

(72) Inventors:
• **MORIKAWA, Yuki
Tokyo, 103-0022 (JP)**
• **MITA, Kazutaka
Tokyo, 103-0022 (JP)**
• **NISHIDE, Daisuke
Tokyo, 103-0022 (JP)**

(74) Representative: **Kuhnen & Wacker
Patent- und Rechtsanwaltsbüro PartG mbB
Prinz-Ludwig-Straße 40A
85354 Freising (DE)**

(54) **NON-AQUEOUS ELECTROLYTE SECONDARY BATTERY**

(57)    A non-aqueous electrolyte secondary battery comprises an electrode assembly having a positive electrode, a negative electrode, and a separator, as well as an electrolyte solution and a battery case. The battery case has an exterior package and a sealing plate. The positive electrode has a positive electrode tab at an end of the electrode assembly, and the negative electrode has a negative electrode tab at an end of the electrode assembly. The electrode assembly is accommodated inside the battery case in such a manner that the end having the positive electrode tab and the end having the negative electrode tab face the sealing plate. T1 and T2 have the meanings as defined in the claims and the description, and satisfy a relationship of the following expression (I).

$$1.05 \leq T2/T1 \leq 1.4 \qquad (I)$$

FIG.2

**Description**

CROSS REFERENCE TO RELATED APPLICATIONS

This nonprovisional application is based on Japanese Patent Application No. 2023-083330 filed on May 19, 2023, with the Japan Patent Office, the entire contents of which are hereby incorporated by reference.

BACKGROUND OF THE INVENTION

Field of the Invention

The present invention relates to a non-aqueous electrolyte secondary battery.

Description of the Background Art

Typically, batteries such as non-aqueous electrolyte secondary batteries comprise an electrode assembly having a positive electrode and a negative electrode, as well as a battery case for accommodating the electrode assembly. The battery case comprises an exterior package for accommodating the electrode assembly, as well as a sealing plate for sealing the opening of the exterior package. As a battery of this type, a prismatic battery comprising a prismatic (box-shaped) exterior package is known. Japanese Patent Laying-Open No. 2016-189247 discloses a prismatic battery in which a positive electrode tab part of a positive electrode and a negative electrode tab part of a negative electrode are positioned on the sealing plate side of the battery case.

SUMMARY OF THE INVENTION

It was found that the cycling performance of such a battery having a positive electrode tab and a negative electrode tab on the sealing plate side can be degraded after a long-term use.
An object of the present disclosure is to provide a non-aqueous electrolyte secondary battery that has excellent long-term endurance where degradation of cycling performance due to long-term use is reduced.

[1] A non-aqueous electrolyte secondary battery comprising:

an electrode assembly having a positive electrode, a negative electrode, and a separator interposed between the positive electrode and the negative electrode;
an electrolyte solution; and
a battery case accommodating the electrode assembly and the electrolyte solution, wherein
the battery case has an exterior package having an opening, and a sealing plate for sealing the opening,
the positive electrode has a positive electrode tab that is a protruding portion of the positive electrode, at an end of the electrode assembly,
the negative electrode has a negative electrode tab that is a protruding portion of the negative electrode, at an end of the electrode assembly,
the electrode assembly is accommodated inside the battery case in such a manner that the end having the positive electrode tab and the end having the negative electrode tab face the sealing plate, and
when a length of the separator in a direction from the sealing plate of the battery case toward a bottom part facing the sealing plate is defined as L, T1 which represents an air permeability of a first region of the separator that extends for a distance of 0.3L from an end of the separator close to the sealing plate toward the bottom part, and T2 which represents an air permeability of a second region of the separator that extends for a distance of 0.3L from an end of the separator close to the bottom part toward the sealing plate, satisfy a relationship of the following expression (I):

$$1.05 \leq T2/T1 \leq 1.4 \qquad \text{(I)}.$$

[2] The non-aqueous electrolyte secondary battery according to [1], wherein the battery case is prismatic.
[3] The non-aqueous electrolyte secondary battery according to [1] or [2], wherein the electrode assembly is a wound-type electrode assembly.
[4] The non-aqueous electrolyte secondary battery according to any one of [1] to [3], wherein the separator has a base material, and a functional layer formed on at least one side of the base material.

[5] The non-aqueous electrolyte secondary battery according to [4], wherein the functional layer includes an adhesive layer.

[6] The non-aqueous electrolyte secondary battery according to any one of [1] to [5], wherein a restraining pressure of 0.05 MPa or more is applied to the non-aqueous electrolyte secondary battery in a stacking direction of the positive electrode, the negative electrode, and the separator.

[7] The non-aqueous electrolyte secondary battery according to any one of [1] to [6], wherein the first region is thicker than the second region.

[8] The non-aqueous electrolyte secondary battery according to [7], wherein as for both the positive electrode and the negative electrode, a region thereof facing the first region is thinner than a region thereof facing the second region.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a schematic perspective view of a non-aqueous electrolyte secondary battery according to an embodiment.

Fig. 2 is a II-II cross-sectional view of Fig. 1.

Fig. 3 is a schematic front view of a separator as a constituent of an electrode assembly.

## DESCRIPTION OF THE PREFERRED EMBODIMENTS

(Non-Aqueous Electrolyte Secondary Battery)

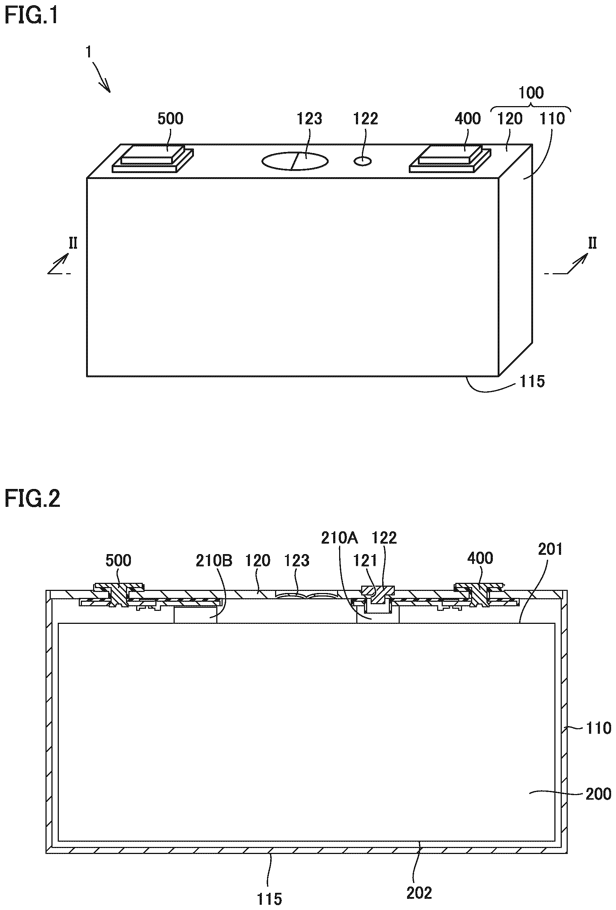

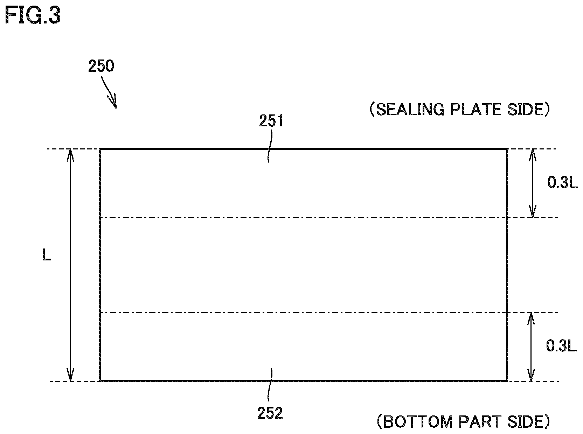

Fig. 1 is a schematic perspective view of a non-aqueous electrolyte secondary battery according to an embodiment. Fig. 2 is a II-II cross-sectional view of Fig. 1. Fig. 3 is a schematic front view of a separator as a constituent of an electrode assembly.

A non-aqueous electrolyte secondary battery 1 according to the present embodiment (hereinafter also called "the present battery") is, for example, a lithium-ion secondary battery that is charged and discharged through occlusion and release of lithium ions. As illustrated in Fig. 1 and Fig. 2, present battery 1 comprises an electrode assembly 200, an electrolyte solution, and a battery case 100 that accommodates electrode assembly 200 and the electrolyte solution.

Battery case 100 has an exterior package 110 having an opening, as well as a sealing plate 120 for sealing the opening of exterior package 110. Preferably, present battery 1 is a prismatic battery having a prismatic (box-shaped) battery case. Exterior package 110 can have space for accommodating the electrode assembly and the electrolyte solution, and can be prismatic (box-shaped). Exterior package 110 has a bottom part 115 that faces sealing plate 120. After electrode assembly 200 is placed inside the exterior package 110, sealing plate 120 can be attached to the exterior package so as to close the opening of exterior package 110. Attaching the sealing plate 120 to exterior package 110 can be carried out by bonding it to the edge of the opening of exterior package 110 by welding and/or the like. Sealing plate 120 may have a liquid inlet hole 121 through which the electrolyte solution is to be injected, a sealing member 122 for sealing liquid inlet hole 121, and a gas-discharge valve 123 that breaks when the pressure inside the battery case 100 reaches a certain value or higher.

Electrode assembly 200 has a positive electrode, a negative electrode, and a separator interposed between the positive electrode and the negative electrode. In Fig. 2, the positive electrode, the negative electrode, and a separator 250 are stacked in a direction orthogonal to the surface of the paper. Electrode assembly 200 may be a wound-type electrode assembly that is formed by stacking the positive electrode, the negative electrode, and the separator and winding the resulting stack, or may be a stack-type electrode assembly that is formed by stacking the positive electrode, the negative electrode, and the separator. The wound-type electrode assembly may be pressed into a flat shape after the stack is wound. The plan-view shape of the stack-type electrode assembly may be tetragonal, preferably square or rectangle, more preferably rectangle.

The positive electrode has a positive electrode tab 210A that is a protruding portion of the positive electrode, at an end 201 of electrode assembly 200 (Fig. 2). Positive electrode tab 210A can be a connecting portion at which a positive electrode terminal 400, which is an external terminal of present battery 1, is electrically connected with the positive electrode. The positive electrode can have a positive electrode current collector and a positive electrode active material layer formed on the positive electrode current collector. In this configuration, positive electrode tab 210A can be formed of a region of the positive electrode current collector on which the positive electrode active material layer is not formed, in such a manner that it protrudes outwardly from a region of the positive electrode current collector on which the positive electrode active material layer is formed.

The negative electrode has a negative electrode tab 210B that is a protruding portion of the negative electrode, at end 201 of electrode assembly 200 (Fig. 2). Negative electrode tab 210B can be a connecting portion at which a negative electrode terminal 500, which is an external terminal of present battery 1, is electrically connected with the negative electrode. The negative electrode can have a negative electrode current collector and a negative electrode active material layer formed on the negative electrode current collector. In this configuration, negative electrode tab 210B can be formed of a region of the negative electrode current collector on which the negative electrode active material layer is not formed, in such a manner that it protrudes outwardly from a region of the negative electrode current collector on which the negative electrode active material layer is formed.

The end 201 of electrode assembly 200 at which positive electrode tab 210A is provided is usually the same as the end 201 at which negative electrode tab 210B is provided (Fig. 2). When electrode assembly 200 is a wound-type electrode assembly, positive electrode tab 210A and negative electrode tab 210B are preferably provided at one of the ends of electrode assembly 200 in a direction parallel to the axis of winding. When electrode assembly 200 is a stack-type electrode assembly and the plan-view shape of the stack-type electrode assembly is tetragonal, both the positive electrode tab 210A and the negative electrode tab 210B are preferably provided on the same one side of the tetragon. When the plan-view shape of the stack-type electrode assembly is rectangle, both the positive electrode tab 210A and the negative electrode tab 210B may be provided on one of the long sides of the rectangle.

As illustrated in Fig. 2, electrode assembly 200 is accommodated inside the battery case 100 in such a manner that the end 201 having positive electrode tab 210A and negative electrode tab 210B faces sealing plate 120. In this configuration, as compared to an end 202 of electrode assembly 200 facing the end 201, the end 201 is located close to sealing plate 120. The direction in which positive electrode tab 210A and negative electrode tab 210B protrude when electrode assembly 200 is accommodated inside the battery case 100 (namely, the vertical direction in Fig. 2) may be orthogonal to the plane of sealing plate 120. For example, when electrode assembly 200 is a wound-type electrode assembly, positive electrode tab 210A and negative electrode tab 210B may be provided at one of the ends of the wound-type electrode assembly in a direction parallel to the axis of winding and electrode assembly 200 may be accommodated inside the battery case 100 in such a manner that the above-mentioned end faces sealing plate 120 and the axis of winding of the wound-type electrode assembly is positioned orthogonal to sealing plate 120.

Separator 250 of the electrode assembly may have a base material, and may also have a functional layer on at least one side of the base material. The functional layer may be formed on both sides of the base material. The functional layer can be an adhesive layer, a heat-resistant layer, and the like. The functional layer includes either or both of an adhesive layer and a heat-resistant layer. Preferably, separator 250 includes a base material, as well as an adhesive layer as a functional layer.

As illustrated in Fig. 3, separator 250 has a length of L in a direction from sealing plate 120 of battery case 100 toward bottom part 115 facing the sealing plate 120. Separator 250 has a first region 251 that extends for a distance of 0.3L from its sealing plate 120-side end toward bottom part 115, as well as a second region 252 that extends for a distance of 0.3L from its bottom part 115-side end toward sealing plate 120. The air permeability of first region 251, T1, and the air permeability of second region 252, T2, satisfy the relationship of the following expression (I).

$$1.05 \leq T2/T1 \leq 1.4 \qquad (I)$$

Fig. 3 illustrates separator 250 included in electrode assembly 200 accommodated inside the battery case 100, viewed from the front of battery case 100 (namely, in the direction viewed in Fig. 2). Accordingly, the length L of separator 250 is the length of separator 250 when electrode assembly 200 accommodated inside the battery case 100 is viewed in the stacking direction of the positive electrode, the negative electrode, and separator 250 (namely, the length thereof in the vertical direction in Fig. 2).

Air permeability T1 and air permeability T2 represent the time required for permeation of a certain amount of gas, and when the value is high, gas tends not to permeate. Air permeability T1 and air permeability T2 of first region 251 and second region 252, respectively, are measured at a flat portion of a separator 250 that is located outermost, among all the separators interposed between a positive electrode and a negative electrode, in the stacking direction of the positive electrode, the negative electrode, and the separator of electrode assembly 200; the value can be measured by the method described below in the Examples section.

Usually, present battery 1 is used in the orientation as illustrated in Fig. 1, with its sealing plate 120 side facing upward and its bottom part 115 side facing downward. Accordingly, when present battery 1 is in a fully charged state, the liquid level of the electrolyte solution is usually lower than the sealing plate 120-side end of electrode assembly 200. If a secondary battery is used in this state for an extended period of time without separator 250 satisfying the relationship of the above-mentioned expression (1), the electrolyte solution tends to remain at the bottom part 115 side of battery case 100 and not enough electrolyte solution tends to be present at the sealing plate 120 side. At the sealing plate 120 side where not enough electrolyte solution is present, cycling performance can be degraded, leading to degradation of the long-term endurance of the secondary battery. In contrast to this, in present battery 1, separator 250 satisfies the relationship of the above-mentioned expression (I). As a result, the electrolyte solution exuded out of the negative electrode along with the expansion and shrinkage of the negative electrode during charging and discharging of the battery tends not to pass through separator 250 at second region 252, relatively speaking. In addition to this, because air permeability T1 of first region 251 is less than air permeability T2 of second region 252, the electrolyte solution tends to move inside the separator 250 from the second region 252 side to the first region 251 side. Due to this, the electrolyte solution is readily supplied from the bottom part 115 side of battery case 100 to the sealing plate 120 side, potentially relieving the shortage of the electrolyte solution at the sealing plate 120 side. As a result, even after a long-time use of present battery 1, degradation of cycling performance can be reduced and excellent long-term endurance can be achieved.

The ratio between air permeability T1 and air permeability T2 (T2/T1) may be from 1.1 to 1.3, or may be from 1.1 to 1.2. When this ratio (T2/T1) is low, shortage of the electrolyte solution tends to occur at the sealing plate 120 side, causing degradation of cycling performance. When the ratio (T2/T1) is high, shortage of the electrolyte solution tends to occur at the bottom part 115 side, causing degradation of cycling performance.

Air permeability T1 of first region 251 is not particularly limited as long as it is lower than air permeability T2 of second region 252, and it may be from 50 seconds to 400 seconds, or may be from 80 seconds to 300 seconds, or may be from 120 seconds to 250 seconds. Air permeability T2 of second region 252 is not particularly limited as long as it is higher than air permeability T1 of first region 251, and it may be from 80 seconds to 500 seconds, or may be from 100 seconds to 400 seconds, or may be from 150 seconds to 350 seconds.

The air permeability of the intermediate region of separator 250 present between first region 251 and second region 252 is preferably more than T1 and less than T2.

Air permeability T1 and air permeability T2 of first region 251 and second region 252 of separator 250, respectively, can be adjusted by changing the porosity, density, and thickness of the base material and the functional layer of separator 250, the presence or absence of the functional layer, the type of the functional layer, as well as a combination of these. As a method for forming first region 251 and second region 252 with different air permeabilities, the following methods can be employed, for example.

[a] A method that involves using a base material having a partially-compressed portion and a non-compressed portion, as separator 250, to create differences in the thickness and density.
[b] A method that involves heating the base material to create differences in the porosity of the base material.
[c] A method that involves adjusting at least one of the presence (or absence), type, and coating amount of the functional layer formed on the surface of the base material of separator 250.
[d] Combinations of two or more of the above-described [a] to [c].

Alternatively, first region 251 and second region 252 of separator 250 with different air permeabilities can also be formed during the production of electrode assembly 200, in the manner described below. Electrode assembly 200 may be produced by pressing a stack of a positive electrode, a negative electrode, and separator 250. Each of the positive electrode and the negative electrode prepared for this configuration has regions with different thicknesses, where the region designed to face first region 251 of separator 250 in electrode assembly 200 is thinner and the region designed to face second region 252 is thicker. The positive electrode and the negative electrode thus having different thicknesses are stacked together with the separator to form a stack, pressed, and thereby the thickness of separator 250 is made to be different at different regions corresponding to the thickness of the positive electrode and the negative electrode; namely, first region 251 is made thicker than second region 252. In this manner, the thickness and density of separator 250 are made to be different between first region 251 and second region 252, and, thereby, first region 251 and second region 252 with different air permeabilities are formed.

When electrode assembly 200 is a wound-type electrode assembly, the electrolyte solution enters into electrode assembly 200 from both ends of the wound-type electrode assembly in a direction parallel to the axis of winding. When it is a stack-type electrode assembly, the electrolyte solution enters into electrode assembly 200 from all sides in a plan view. That is, the electrolyte solution enters into electrode assembly 200 less easily and degradation of cycling performance due to electrolyte solution shortage tends to take place when the electrode assembly is a wound-type electrode assembly, as compared to when it is a stack-type electrode assembly. In contrast, when separator 250 satisfies the relationship of the above-mentioned expression (I) as in present battery 1, degradation of cycling performance due to electrolyte solution shortage at the sealing plate 120 side can be reduced and excellent long-term endurance can be achieved even in a configuration where a wound-type electrode assembly is included.

Separator 250 is interposed between the positive electrode and the negative electrode. When separator 250 includes an adhesive layer, the adhesive layer makes it possible to position separator 250 close to the positive electrode and the negative electrode, resulting in a decrease of the distance between the negative electrode and the positive electrode (the distance between electrode plates). In a battery that comprises an electrode assembly with a small distance between electrode plates, as compared to a battery that comprises an electrode assembly with a relatively large distance between electrode plates, the electrolyte solution readily moves from the second region 252 side to the first region 251 side of separator 250, resulting in an even more enhanced long-term endurance.

To present battery 1, a restraining pressure of 0.05 MPa or more may be applied in the stacking direction of the positive electrode, the negative electrode, and separator 250. The restraining pressure may be 0.1 MPa or more, or may be 0.5 MPa or more, or may be from 0.5 MPa to 5 MPa, or may be from 0.5 MPa to 4 MPa, or may be from 0.5 MPa to 3 MPa. The restraining pressure can be measured with a tactile sensor. In present battery 1 to which the restraining pressure is applied, the distance between electrode plates can be smaller, and thereby the electrolyte solution can readily move from the second region 252 side to the first region 251 side of separator 250. As a result, in present battery 1 to which the restraining pressure is applied, long-term endurance can be even more enhanced.

The length L of separator 250 is 50 mm or more, for example, and may be 80 mm or more, or 100 mm or more, and is usually 120 mm or less. When the length L of separator 250 is great, degradation of cycling performance caused by shortage of electrolyte solution at the sealing plate 120 side tends to take place. When separator 250 satisfies the relationship of the above-mentioned expression (1) as in present battery 1, present battery 1 having excellent long-term endurance can be obtained even in a configuration where the length L is great.

As described above, the positive electrode plate can have the positive electrode current collector and a positive electrode active material layer formed on the positive electrode current collector. For example, the positive electrode current collector is a metal foil made of an aluminum material such as aluminum and aluminum alloy. The positive electrode active material layer includes a positive electrode active material. Examples of the positive electrode active material include lithium transition metal oxides of layered type, spinel type, and the like (such as $LiNiCoMnO_2$, $LiNiO_2$, $LiCoO_2$, $LiFeO_2$, $LiMn_2O_4$, $LiNi_{0.5}Mm_{1.5}O_4$, $LiCrMnO_4$, $LiFePO_4$, $LiNi_{1/3}Co_{1/3}Mn_{1/3}O_2$, for example). Preferably, the lithium transition metal oxide is lithium-nickel-cobalt-manganese composite oxide (NCM).

The positive electrode active material layer can include either or both of a binding material and a conductive aid, in addition to the positive electrode active material. Examples of the binding material include styrene-butadiene rubber (SBR), polyvinylidene difluoride (PVdF), polytetrafluoroethylene (PTFE), and the like. Examples of the conductive aid include carbon materials such as fibrous carbon, carbon black (such as acetylene black, Ketjenblack), coke, and activated carbon. Examples of the fibrous carbon include carbon nanotubes (hereinafter also called "CNTs"). The CNTs may be single-walled carbon nanotubes (SWCNTs), or may be multi-walled carbon nanotubes such as double-walled carbon nanotubes (DWCNTs).

As described above, the negative electrode plate can have the negative electrode current collector and a negative electrode active material layer formed on the negative electrode current collector. For example, the negative electrode current collector is a metal foil made of a copper material such as copper and copper alloy. The negative electrode active material layer includes a negative electrode active material. Examples of the negative electrode active material include carbon-based active materials that include a carbon (C) atom, such as graphite; and metal-based active materials that include a metallic element such as an elemental metal or a metal oxide including an element selected from the group consisting of silicon (Si), tin (Sn), antimony (Sb), bismuth (Bi), titanium (Ti), and germanium (Ge). The negative electrode active material layer may include a Si-based active material that includes a silicon element, as a metal-based active material. Examples of the Si-based active material include the elemental silicon, SiC (a composite material of silicon and carbon; for example, silicon nanoparticles dispersed inside porous carbon particles), SiOx, LixSiyOz, and the like.

The negative electrode active material layer can include either or both of a binding material and a conductive aid, in addition to the negative electrode active material. Examples of the binding material include cellulose-based binding materials such as carboxymethyl cellulose (CMC), methylcellulose (MC), and hydroxypropylcellulose; and styrene-butadiene rubber (SBR), polyacrylic acid (PAA), acrylonitrile butadiene rubber (NBR), polyvinylidene difluoride (PVdF), polytetrafluoroethylene (PTFE), and the like. Examples of the conductive aid include those described above.

The base material of the separator can be a porous sheet such as a film and a nonwoven fabric made of a resin such as polyethylene, polypropylene, polyester, cellulose, and/or polyamide. The base material may have a monolayer structure or a multilayer structure. The adhesive layer of the separator can be formed with an adhesive agent. For example, the separator having the base material and the adhesive layer may be formed by applying an adhesive agent to the base material, or by applying an adhesive agent to a release sheet and/or the like to form the adhesive layer and then stacking the resulting adhesive layer on the base material followed by peeling away the release sheet. Examples of the adhesive agent include hot-melt adhesive agents, ultraviolet-curable adhesive agents, thermosetting adhesive agents, and the like. As the base resin of the adhesive agent, one or more resins selected from the group consisting of acrylic resins, urethane resins, ethylene vinyl acetate resins, epoxy resins, and fluororesins can be used, for example. A heat-resistant layer of the separator includes a filler, and may further include a binder and/or the like. Examples of the filler include ceramic particles which are one or more types selected from the group consisting of alumina, boehmite, aluminum hydroxide, silica, magnesia, titania, silicon nitride, and titanium nitride. Examples of the binder include one or more types selected from the group consisting of acrylic-based binders such as acrylic resins, fluoropolymer-based binders such as polyvinylidene difluoride, and styrene-butadiene rubber (SBR).

The electrolyte solution is usually a non-aqueous electrolyte solution, and preferably obtained by adding a supporting salt to a non-aqueous solvent such as an organic solvent. Examples of the supporting salt include $LiPF_6$, $LiBF_4$, $LiClO_4$, $LiFSO_3$, LiBOB (lithium bis(oxalato)borate), and the like. The electrolyte solution may include one, two, or more supporting salts among these. Examples of the non-aqueous solvent include ethylene carbonate (EC), ethyl methyl carbonate (EMC), dimethyl carbonate (DMC), propylene carbonate (PC), diethyl carbonate (DEC), and the like. The electrolyte solution can include one, two, or more non-aqueous solvents among these. The electrolyte solution may include an additive and the like, in addition to the supporting salt and the non-aqueous solvent described above.

Exterior package 110 and sealing plate 120 of battery case 100 are preferably made of metal, and can be formed with aluminum, aluminum alloy, iron, iron alloy, or the like, and, for example, can be formed with an aluminum laminated film.

[Examples]

In the following, the present disclosure will be described in further detail by way of Examples and Comparative Examples.

[Example 1]

(Production of Positive Electrode)

Lithium-nickel-cobalt-manganese composite oxide (NCM) as a positive electrode active material, acetylene black (AB) as a conductive aid, and polyvinylidene difluoride (PVdF) as a binding material were used in a mass ratio of NCM:AB:PVdF=97:2:1 and mixed with N-methylpyrrolidone (NMP) to obtain a positive electrode composite material slurry. The resulting positive electrode composite material slurry was applied to an aluminum foil of a thickness of 15 $\mu$m serving as a positive electrode current collector in such a manner that an end (a side edge portion) of the positive electrode current collector in a widthwise direction became exposed to form an exposed portion (1), and dried. Subsequently, a pair of rollers were used to compress the positive electrode composite material slurry applied to the positive electrode current collector to form a positive electrode active material layer on the positive electrode current collector, and thereby a positive electrode raw sheet was obtained. The resulting positive electrode raw sheet had a region where the positive electrode active material layer was formed on the positive electrode current collector, and the exposed portion (1) where the positive electrode active material layer was not formed and the positive electrode current collector was exposed. The positive electrode active material layer was formed to have a relatively thin layer of positive electrode active material at the exposed portion (1) side; the amount of the positive electrode composite material slurry applied to the exposed portion (1)-side region was less than the amount of the positive electrode composite material slurry applied to the other region, and compression was carried out with the roller-to-roller gap adjusted as appropriate. Subsequently, the positive electrode raw sheet was cut so as to form multiple positive electrode tabs at regular intervals, and thereby a positive electrode was obtained. The positive electrode tabs were formed of the exposed portion (1) region.

(Production of Negative Electrode)

Graphite as a negative electrode active material as well as carboxymethylcellulose (CMC) and styrene-butadiene rubber (SBR) as binding materials were used in a mass ratio of graphite:CMC:SBR=:100:1:1, and mixed with water and kneaded in a stirring granulator to obtain a negative electrode composite material slurry. The resulting negative electrode composite material slurry was applied to a copper foil of a thickness of 10 $\mu$m serving as a negative electrode current collector in such a manner that an end (a side edge portion) of the negative electrode current collector in a widthwise direction became exposed to form an exposed portion (2), and dried. Subsequently, a pair of rollers were used to compress the negative electrode composite material slurry applied to the negative electrode current collector to form a negative electrode active material layer on the negative electrode current collector, and thereby a negative electrode raw sheet was obtained. The resulting negative electrode raw sheet had a region where the negative electrode active material layer was formed on the negative electrode current collector, and the exposed portion (2) where the negative electrode active material layer was not formed and the negative electrode current collector was exposed. The negative electrode active material layer was formed to have a relatively thin layer of negative electrode active material at the exposed portion (2) side; the amount of the negative electrode composite material slurry applied to the exposed portion (2)-side region was less than the amount of the negative electrode composite material slurry applied to the other region, and compression was carried out with the roller-to-roller gap adjusted as appropriate. Subsequently, the negative electrode raw sheet was cut so as to form multiple negative electrode tabs at regular intervals, and thereby a negative electrode was obtained. The negative electrode tabs were formed of the exposed portion (2) region.

(Production of Electrode Assembly)

A separator (1) having a base material and not having an adhesive layer was prepared. The positive electrode and the negative electrode were stacked with the separator (1) interposed therebetween, to obtain a stack. At this time, the positive electrode and the negative electrode were stacked so that the positive electrode tab and the negative electrode tab did not overlap in the stacking direction of the stack. The stack was wound and pressed to obtain a flat-shaped wound-type electrode assembly. As a result of the pressing of the wound stack, the separator (1) was compressed in a manner that corresponded to the thickness of the positive electrode (the positive electrode active material layer) and the negative electrode (the negative electrode active material layer), resulting in different thicknesses at different regions of the separator (1).

(Production of Non-Aqueous Electrolyte Secondary Battery)

$LiPF_6$ as a supporting salt, and a mixed solvent of ethylene carbonate (EC), ethyl methyl carbonate (EMC), and dimethyl carbonate (DMC) (EC:EMC:DMC=30:40:40 (volume ratio)) as a non-aqueous solvent were mixed together to prepare an electrolyte solution in which the concentration of $LiPF_6$ was 1 mol/L. The electrode assembly and the electrolyte solution were placed in a prismatic battery case having an exterior package and a sealing plate, in such a manner that, as illustrated in Fig. 2, the end of the electrode assembly provided with the positive electrode tab and the negative electrode tab faced the sealing plate side, and thereby a battery was obtained. In the electrode assembly thus accommodated inside the battery case, the separator was thicker at the sealing plate side and thinner at the bottom part side, and the positive electrode and the negative electrode were thinner at the sealing plate side and thicker at the bottom part side. A restraint plate was placed on each of the two sides of the battery parallel to the axis of winding of the electrode assembly (in other words, the two sides of the electrode assembly orthogonal to the stacking direction of the positive electrode, the negative electrode, and the separator) in such a manner to sandwich the battery with the two restraint plates, to apply a restraining pressure of 0.05 MPa or more to the battery. The restraining pressure was measured with a tactile sensor.

[Examples 2 to 4, Comparative Examples 1 to 3]

The amount of the positive electrode composite material slurry and the amount of the negative electrode composite material slurry to be applied, the degree of compression performed to the positive electrode composite material slurry applied to the positive electrode current collector, and the degree of compression performed to the negative electrode composite material slurry applied to the negative electrode current collector were adjusted so as to make the air permeability of the first region and the second region of the separator satisfy the relationship specified in Table 1, and, thus, an electrode assembly was produced. Except this electrode assembly was used, the same procedure as in Example 1 was carried out to obtain a battery to which a restraining pressure was applied.

[Example 5]

A separator (2) having an adhesive layer on each side of a base material was prepared. Except this separator (2) was used, the same procedure as in Example 1 was carried out to obtain an electrode assembly, and thereby obtain a battery to which a restraining pressure was applied.

[Measurement of Air Permeability]

As for a separator that was located outermost among all the separators interposed between a positive electrode and a negative electrode in the electrode assembly (namely, a separator positioned closest to the outer circumference of the wound-type electrode assembly), the length thereof in the direction from the sealing plate of the battery case toward the bottom part was defined as L, the region thereof that extended for a distance of 0.3L from the sealing plate-side end toward the bottom part side was defined as a first region, and the region thereof that extended for a distance of 0.3L from the bottom part-side end toward the sealing plate side was defined as a second region. Three or more separate positions were selected from each of the first region and the second region so as to allow for measuring the air permeability of all over the respective regions at a flat portion of the wound-type electrode assembly. These positions thus selected were securely positioned directly below the measuring head of an Oken-type tester to measure the air permeability, and the arithmetic mean thereof was calculated. The results were regarded as the air permeability of the first region, T1, and the air permeability of the second region, T2, respectively, and the ratio between them (T2/T1) was calculated. Results are shown in Table 1.

EP 4 465 395 A1

[Cycle Testing]

In an environment at 25°C, the battery was charged and discharged for multiple cycles, where a single cycle consisted of charging at a value of current of 0.33 C to reach 4.1 Vcccv (constant current, constant voltage) (cutoff current, 0.05 C) and discharging at a value of current of 0.33 C to reach a potential of 3 V. According to the following equation, the ratio of the discharged capacity at the 200th cycle, W200, to the discharged capacity at the first cycle, W1, was calculated, which was defined as capacity retention [%]. Results are shown in Table 1.

$$\text{Capacity retention } [\%]=(W200/W1)\times100$$

[Table 1]

| | | Separator | | | | Battery | |
|---|---|---|---|---|---|---|---|
| | | First region | Second region | Ratio | Adhesive layer | Restraining pressure | Cycling performance |
| | | Air permeability T1 [seconds] | Air permeability T2 [seconds] | T2/T1 | | | Capacity retention [%] |
| Comp. Ex. 1 | | 230 | 194 | 0.84 | No | Yes | 86 |
| Comp. Ex. 2 | | 164 | 167 | 1.02 | No | Yes | 93 |
| Ex. 1 | | 161 | 171 | 1.06 | No | Yes | 95 |
| Ex. 2 | | 186 | 214 | 1.15 | No | Yes | 97 |
| Ex. 3 | | 211 | 267 | 1.27 | No | Yes | 96 |
| Ex. 4 | | 187 | 258 | 1.38 | No | Yes | 95 |
| Comp. Ex. 3 | | 212 | 326 | 1.54 | No | Yes | 88 |
| Ex. 5 | | 193 | 226 | <u>1.17</u> | <u>Yes</u> | <u>Yes</u> | 99 |

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

**Claims**

1.  A non-aqueous electrolyte secondary battery (1) comprising:

an electrode assembly (200) having a positive electrode, a negative electrode, and a separator (250) interposed between the positive electrode and the negative electrode;
an electrolyte solution; and
a battery case (100) accommodating the electrode assembly (200) and the electrolyte solution, wherein
the battery case (100) has an exterior package (110) having an opening, and a sealing plate (120) for sealing the opening,
the positive electrode has a positive electrode tab (210A) that is a protruding portion of the positive electrode, at an end of the electrode assembly (200),
the negative electrode has a negative electrode tab (210B) that is a protruding portion of the negative electrode, at an end of the electrode assembly (200),
the electrode assembly (200) is accommodated inside the battery case (100) in such a manner that the end having the positive electrode tab (210A) and the end having the negative electrode tab (210B) face the sealing plate (120), and
when a length of the separator (250) in a direction from the sealing plate (120) of the battery case (100) toward a bottom part (115) facing the sealing plate (120) is defined as L, T1 which represents an air permeability of a first region (251) of the separator (250) that extends for a distance of 0.3L from an end of the separator (250) close to the sealing plate (120) toward the bottom part (115), and T2 which represents an air permeability of a second

9

region (252) of the separator (250) that extends for a distance of 0.3L from an end of the separator (250) close to the bottom part (115) toward the sealing plate (120), satisfy a relationship of the following expression (I):

$$1.05 \leq T2/T1 \leq 1.4 \qquad (I).$$

2. The non-aqueous electrolyte secondary battery (1) according to claim 1, wherein the battery case (100) is prismatic.

3. The non-aqueous electrolyte secondary battery (1) according to claim 1 or 2, wherein the electrode assembly (200) is a wound-type electrode assembly.

4. The non-aqueous electrolyte secondary battery (1) according to any one of claims 1 to 3, wherein the separator (250) has a base material, and a functional layer formed on at least one side of the base material.

5. The non-aqueous electrolyte secondary battery (1) according to claim 4, wherein the functional layer includes an adhesive layer.

6. The non-aqueous electrolyte secondary battery (1) according to any one of claims 1 to 5, wherein a restraining pressure of 0.05 MPa or more is applied to the non-aqueous electrolyte secondary battery in a stacking direction of the positive electrode, the negative electrode, and the separator (250).

7. The non-aqueous electrolyte secondary battery (1) according to any one of claims 1 to 6, wherein the first region (251) is thicker than the second region (252).

8. The non-aqueous electrolyte secondary battery (1) according to claim 7, wherein as for both the positive electrode and the negative electrode, a region thereof facing the first region (251) is thinner than a region thereof facing the second region (252).

**FIG.1**

**FIG.2**

## FIG.3

Europäisches
Patentamt
European
Patent Office
Office européen
des brevets

# EUROPEAN SEARCH REPORT

**Application Number**

EP 24 16 7504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/004277 A1 (SAMSUNG SDI CO LTD [KR]) 4 January 2018 (2018-01-04) * the whole document * | 1-8 | INV. H01M10/04 H01M10/0587 H01M50/103 |
| X | JP 2007 123237 A (SANYO ELECTRIC CO) 17 May 2007 (2007-05-17) * paragraphs [0006] - [0009], [0016], [0021] - [0025], [0041], [0042]; claim 1 * | 1-8 | H01M50/147 H01M50/449 H01M50/46 H01M50/489 |
| A | US 2021/242538 A1 (LEE JOO-SUNG [KR] ET AL) 5 August 2021 (2021-08-05) * paragraphs [0008], [0009], [0043] - [0057], [0068], [0069], [0076]; figures 1-4 * | 1-8 | |

**TECHNICAL FIELDS SEARCHED (IPC)**

H01M

The present search report has been drawn up for all claims

| Place of search | Date of completion of the search | Examiner |
|---|---|---|
| Munich | 13 August 2024 | Mugnaini, Veronica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 465 395 A1**

## ANNEX TO THE EUROPEAN SEARCH REPORT
## ON EUROPEAN PATENT APPLICATION NO.

EP 24 16 7504

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2024

| Patent document cited in search report | Publication date | Patent family member(s) | Publication date |
|---|---|---|---|
| WO 2018004277 A1 | 04-01-2018 | KR 20180003177 A<br>WO 2018004277 A1 | 09-01-2018<br>04-01-2018 |
| JP 2007123237 A | 17-05-2007 | NONE | |
| US 2021242538 A1 | 05-08-2021 | CN 112055899 A<br>EP 3817093 A1<br>JP 7035217 B2<br>JP 2021517725 A<br>KR 20190140681 A<br>TW 202002360 A<br>US 2021242538 A1<br>WO 2019240500 A1 | 08-12-2020<br>05-05-2021<br>14-03-2022<br>26-07-2021<br>20-12-2019<br>01-01-2020<br>05-08-2021<br>19-12-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023083330 A
- JP 2016189247 A